# EUROPEAN PATENT SPECIFICATION

(11) **EP 3 790 280 B1**
(45) Date of publication and mention of the grant of the patent: **15.11.2023**
(21) Application number: 20188886.4
(22) Date of filing: 31.07.2020
(51) Int. Cl.: H04W 12/50, H04W 12/63, H04N 21/4363, H04N 21/258, H04N 21/41

(54) **SYSTEM AND METHODS OF DEVICE PAIRING**
SYSTEM UND VERFAHREN ZUR PAARUNG VON VORRICHTUNGEN
SYSTÈME ET PROCÉDÉS D'APPARIEMENT DE DISPOSITIFS

(30) Priority: 03.09.2019 CH 11092019
(43) Date of publication of application: 10.03.2021
(73) Proprietor: eSMART Technologies SA, 1020 Renens (CH)
(72) Inventor: Lilis, Georgios, 1030 Bussigny (CH); Lo Conte, Fabrizio, 1020 Renens (CH)
(74) Representative: P&TS SA (AG, Ltd.)

(56) References cited:
- EP-A1- 3 332 571
- EP-A2- 1 372 040
- EP-A2- 2 761 903
- CN-A- 105 049 121
- CN-A- 109 195 136
- DE-A1-102018 105 113
- US-A- 4 957 362
- US-A1- 2006 007 446
- US-A1- 2010 227 549
- US-A1- 2012 246 480
- US-A1- 2013 122 810
- US-A1- 2014 248 019
- US-A1- 2015 161 477
- US-A1- 2016 295 349
- US-A1- 2019 206 562
- US-B1- 6 489 984
- US-B1- 10 187 362

## Description

### Field of the invention

The present disclosure relates to techniques that facilitate pairing of electronic portable devices including mobile wireless devices, touchscreen-enabled electronic devices with a stationary device, wall-mounted devices and so on. The pairing involves an audio-based communication as an automatic means of security key exchange and authentication with the portable devices, and for facilitating communication between the paired electronic devices.

### Description of related art

It is known to use ultrasound for short-range communication between electronic devices, including for example smartphones and devices for audio-visual reproduction. US Patent US 9, 225 937 B2 relates to ultrasound pairing in teleconferencing systems and describes techniques for controlling and automatically adjusting ultrasound level.
US 20160295349 A1 discloses secure communications between fixed and mobile devices. EP2761903 A2 relates to a method generating, by the first device, an image that includes a unique identifier for identifying the first device and a security code, and displaying the image on a display of the first device. US2013/122810 A1 and US2010/227549 A1 relate to a pairing process based on a pairing code being transmitted by the first device to the second and where the user has to type such security pin code in order to confirm the pairing. EP3332571 A1 relates to server-assisted pairing for wireless communications. CN 109105136 A relates to an Internet of Vehicles (loV) system performing connection authentications through a public network. There are no solutions in the known art for a secured and easy pairing of a generic mobile device with a wall mounted control panel for controlling and visualizing parameters associated to houses and buildings, like temperature, stores etc.

There are various know techniques to connect and pair electronic devices to share information between the devices. In the present disclosure, "pairing" designates the process of associating two networked devices together to establish a communication channel between the devices. "Pairing" may be implemented by associating the devices in a server that acts as communication proxy, providing each device with keys and addresses that allow the communication in a serverless environment, or in any other way. Preferably, pairing provides for secure data transfer between the devices, typically through the use of encryption. Thus, the pairing ensures both the secure data transfer and the appropriate device reception.

In many known arrangements especially with a static pin code, however, pairing requires the entry or the verification of a pin code. This can be sometimes challenging for a user. The user may not have the code at hand or has forgotten it. Furthermore, a static pin code may be lost, shared, or stolen without the user's knowledge and consent. Pin entry requires a keyboard or an equivalent input device.

One-time codes that are for example displayed on a screen of one device and typed on a keyboard of the other obviate some of the difficulties above, but still they may be mistyped. The procedure could be challenging for sight-impaired or non-technology familiar users, and require the presence of said display and keyboard.

Another pairing method using dynamic pins generations for authentication is based on RF radio frequency. However, such schemes may be vulnerable to eavesdropping since the RF signals can travel relative long distances and can be intercepted.

Thus, there is a need for improved techniques to facilitate pairing of wireless devices.

### Brief summary of the invention

An aim of the present invention is the provision of means for safely pairing electronic devices. According to the invention, these aims are achieved by the object of the appended claims.

### Brief Description of the Drawings

The invention will be better understood with the aid of the description of an embodiment given by way of example and illustrated by the figures, in which:
Figure 1 is a schematic diagram of the pairing system in accordance with the examples presented herein.
Figure 2 is a schematic view of the modularity of the wall mounted control panel with the front unit and the rear unit in an exploded view in accordance with the examples presented herein.
Figure 3 is a sequence diagram of the pairing method and system in accordance with the examples presented herein.

### Detailed Description of possible embodiments of the Invention

The specification describes an improved pairing system for the control and automation of a smart home system. A wall mounted control panel module may include a front control panel unit, and a rear processing and connectivity unit. The rear unit is preferably internet-enabled and may establish a secure connection to a remote server. The front control panel is preferably removable and exchangeable extending the main control unit user interfaces.

The pairing system and method pair a generic device, such as a smartphone, a tablet, a laptop, or a personal computer, with the wall mounted control unit. In this way, the elements connected to the control unit can be controlled by the touchscreen of the paired device, through a suitable application. This solution is more economical and user-friendly than installing a touchscreen and the relative interface software in the main control unit: the user can use the mobile device he or she is acquainted with; there is no need for an additional remote controls; the unit can be controlled remotely, once the devices are paired; assembly and handling are simplified; production cost are lowered; and the reliability of the control unit is improved since it needs not include delicate parts like touch-screens.

Walls doors and windows do obstruct certain short-range signals, for example sound, ultrasound, and luminous signals, in contrast with radio signals like WiFi and Bluetooth^{®}. In particular, the following examples and exemplary embodiments describe a preferred embodiment using ultrasound or light as communication means. Ultrasound is an acoustic wave which defines a spectrum of sound waves with frequencies too high for humans to hear that are typically above 20 kHz. Audio signals in any part of the audio spectrum may be used in the frame of the invention, but ultrasounds are preferred because they are inaudible and are attenuated strongly by wall, doors, floors and ceilings, which is a security advantage. Since ultrasounds generally cannot escape the room, is its assured that any emitter/receiver pairs which are communicating with each other with ultrasound are within the same room and cannot be intercepted from afar. The acoustic or ultrasonic signal is preferably beyond of the audible range but low enough so conventional loudspeaker and microphone components of the generic mobile device can still have a useful signal response. The inventors have determined experimentally that signals in the band between 18kHz and 20 kHz are particularly advantageous.

A distinct advantage of the system, unlike similar shared pin pairing schemes, is the automated pairing procedure. Besides the pairing procedure initialization by the user, no further actions, pin inputs or verifications are required. Making the method an ideal candidate for novice technology users and elderly individuals without any proper training on the system.

Moreover, such pairing procedure does not necessitate RF or other specialized hardware to be present to any of the participating devices. As such, not only they can be low cost, but also makes the main control device highly compatible with any mobile device or potential apparatus since it requires only the existence of a microphone and a processing unit. This opens the potential for pairing even the simplest devices, beyond the means of mobile devices, such as sensors and actuators.

Unlike static passwords that can be shared, or QR code that can be photographed and saved, the pin is dynamically generated. Thus, it ensures the privacy of the current home tenant from the previous users of the system.

The aspect of simple key comparison within a narrow timeframe, before securely exchanging the peer to peer keys, permits effectively its encoding within an audio signal; something that would not be possible with initial long secure keys sharing via audio and would have necessitated other less ideal means of transmission as described before.

Further advantages of the disclosed pairing system and methods may be apparent, especially when implemented within the setting of residential and or hotel buildings, comprising a plurality of wall mounted control panels, wherein the plurality of wall mounted control panels may be paired with a plurality of mobile devices. The wall mounted control panels may be located close to each other. For example, this could be the case, when each hotel room comprises a wall mounted control device. In this case for residents of apartment buildings and especially for hotel guests, the easy and secure pairing process allows to pair wall mounted control panels with a plurality of user. The signal broadcasted by the wall mounted control panel cannot be received in adjacent rooms and the timeframe for pairing is narrow.

A further advantageous aspect of the invention is the modularity of the wall mounted control panel. The wall mounted control panel modules comprise a front unit with a front panel and a rear unit with a connectivity and processing unit. The front control panel can be easily detached from the rear unit and exchanged. This could be very advantageous if the user wishes a different type of control panel like a touchscreen panel, or a different design. Furthermore, it is easier and faster to service the main control unit, exchanging only the affected part.

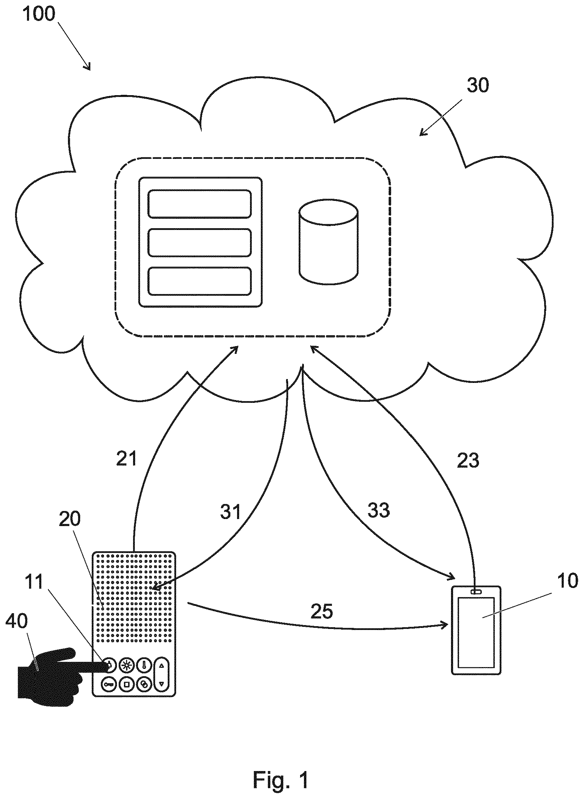

Turning now to FIG. 1, there is illustrated an environment 100 for pairing and syncing electronic devices according to an exemplary embodiment. The device pairing environment 100 illustrated in FIG. 1 includes a mobile device 10, a wall mounted control panel module 20, a remote pairing server 30. As described in this disclosure, the term 'mobile devices' refers to smartphones, mobile/cellular phones or handsets, personal digital assistants (PDAs), tablet computing devices, personal, notebook or workstation computers, multi-function devices (MFDs), kiosks, timepieces, and any other mobile electronic devices that may include a touchscreen display (also referred to herein as a "touch-sensitive surface"), as understood by those skilled in the art. Thus, mobile devices 10 may correspond to one or more of the aforementioned devices. According to this exemplary embodiment, the mobile device 10 is an Internet connected device with touchscreen, such as a smartphone.

In a first instance, each of the devices, the wall mounted control panel 20 and the mobile device 10 are within a local range of emitting or receiving ultrasound signals. The ultrasound signal may be transmitted at an initial default or predetermined level.

The user of the mobile device 10 to be paired with the wall mounted control panel executes a software application installed with the mobile device 10, which could be installed or, if appropriate, a web application. The software application sets the mobile devices 10 into a listening mode. Alternatively, the mobile device 10 may be configured by the software application such that the mobile device remains in a constant listening mode for ultrasound signals, and the pairing software application being launched upon reception of the ultrasound code, completing the pairing in a fully automated manner.

The software application may comprise additional processing for example transcoding, error checking and correction, background noise filtering and cancellation and speaker and/or microphone adaptive amplification methods, for balancing and cancelling out the background noise. The ultrasound signals are received by the integrated sound receiving units of the mobile device, which may comprise, for example, microphones and/or microphone arrays integrated with processing circuitry (e.g., amplifiers, filters, analog-to-digital converters, automatic gain control circuits and the like).

In one exemplary embodiment, the secure code is encoded in a plurality of continuous tones in the range from 18kHz to 20kHz, each tone representing one bit of information. Supposing for example that the code is represented by a 16-bit word, and that the transmitter appends to this word 4 additional bits acting as CRC (cyclical redundancy check) for a total of 20 bits, 20 frequencies will be chosen in the frequency range, each representing one of the bits to be transmitted. The transmitter 20 will then synthesize a waveform comprising all and only the frequencies whose bits have a value '1' and reproduce it on its loudspeaker.

The receiver 10, upon reception of the ultrasound signal with its microphone will extract the amplitudes of the tones, for example via a suitable real-time FFT algorithm and reconstruct the message. The CRC effectively eliminates false positives and negatives pairing attempts. The receiver 10 continues to process the audio signal in real time until the payload is CRC validated without further user action. The receiver depending on the situation might instruct the user to approach closer to the transmitter 20.

The frequency encoding sequence range is flexible and can expand or contract, with more or less bits without alteration in quality of detection. The only limits are the hardware capabilities of audio transceivers in both apparatuses.

An advantage of message encoding scheme is the lack of temporal characteristic in the transmitted audio. Thus, transmitter 20 and receiver 10 do not need to synchronize their audio sequence encoding/decoding procedure. The process can start asynchronously as long as it is performed within the narrow timeframe as discussed above.

The method outlined above lends itself to several variations, all in the frame of the invention: not only the number of bits could vary, but the roles of the transmitter and the receiver could be exchanged, with the smartphone generating the ultrasound, and the wall unit receiving it. The intensity of the individual tones could assume intermediate values than simply "absent" and "present", as such, each tone could encode more than one bit of information, and so on.

An alternative modulation could be to use an audio frequency-shift keying (for example ASFK) form of frequency modulation, or any other suitable form of modulation known in the art.

Preferably, as is shown in Figure 1, the user initializes 11 the signal generation at the wall mounted control panel 20 by activating the pairing mode according to the user manual by pushing 11, touching or switching a button, switch or touchscreen in a predefined way as described in the user manual. Alternatively, the pairing procedure may be triggered automatically when a user approaches the wall unit, for example using a movement sensor in the same. The procedure may also be triggered by wiping or waving motions in front of the wall mounted device, hand clapping, voice commands, or any other suitable input.

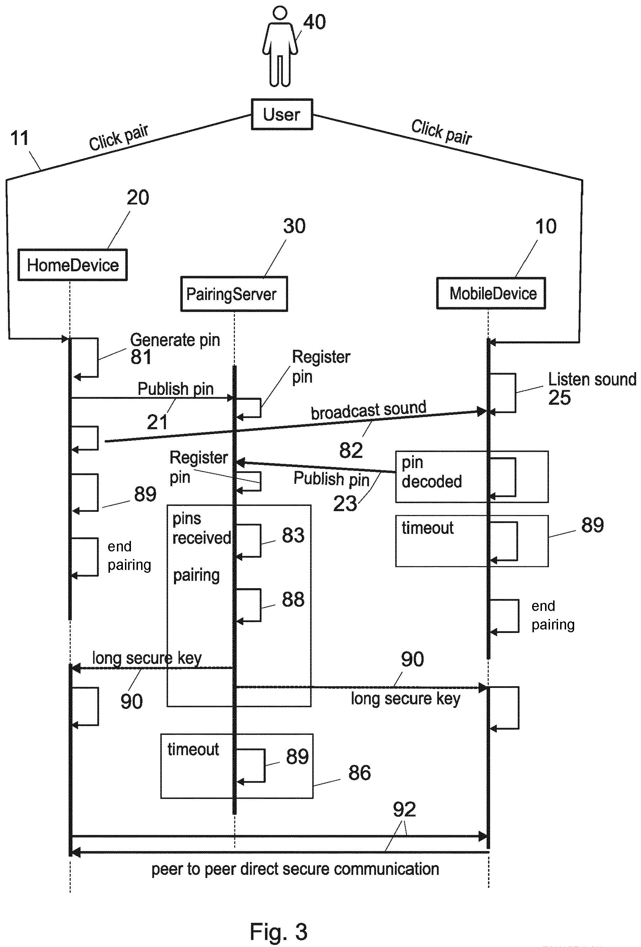

At next, as can be seen more in detail on FIG. 3 the wall mounted control panel 20 generates a security pin code 81 which is repeatedly emitted via ultrasound 82. The listening may be manually activated on mobile device 10. The emitted ultrasound 82 is received on mobile device 10. Upon reception and decoding of the previously generated 81 and emitted security pin code, by the mobile device 10, it establishes a communication 23 to a pairing server 30 via an internet connection. For example, the mobile device may have a wired Ethernet interface, a WiFi interface, or a Cellular Data interface to connect to the server 30. Once the internet connection with the server 30 is established, the secure pin code is sent to the server for verification 23. About the same time, the wall mounted device establishes also a communication channel 21 with the pairing server 30 via a suitable network interface. The wall mounted device 20 sends to pairing server the same security pin code. In the current example, a suitable network interface connects the wall mounted control panel to a local intranet of a local area network (LAN), which connects in turn to a wide area network (WAN), such as the Internet. The LAN may consist in a wireless local area network, a wired ethernet network, or any suitable network with access to server 30.

The pairing server 30, upon receiving the first security pin code from the mobile device 23, compares 83 this security pin code with the security pin code received 21 from the wall mounted device. If both security pin codes do correspond to each other, the pairing server additionally verifies 86, if the reception of pins are within the predetermined time range.

If both conditions are met, the server pairs 88 the devices and generates 90 a secure key for both devices. The secure key is then sent by the server to the mobile device and the wall mounted device 90. With the transmission of the secure key, the mobile device can establish a secure peer to peer 92 communication with the wall mounted control panel.

When the server receives pin signals from the mobile devices 10 and the wall mounted control panel 20 which are spaced apart by more than a permitted pre-set time range, the pairing between the two devices does not ensue 89. This represents the additional time-restricted layer of security.

The above-described pairing method generally achieves in less than 3sec a successful key exchange. Noise rejection method and adaptive speaker/mic amplification configuration permit the key exchange even from long distance within the room and give immunity against various background noise profiles.

In an alternative embodiment, a light source, such as an LED of a mobile device 10, could be used to transmit an encoded secure key in a sequence of light units instead of the ultrasound frequency. This scenario requires a light capturing built in the wall mounted control panel 20, and a predefined positioning of the mobile device with respect to the wall mounted control panel. Similar to sound, adaptive signal analysis technics can be utilized mitigating background light noise. The same scheme of simple pin code exchange, valid for a narrow timeframe, is still valid, permitting a simplified light signal encoding. Requesting a proximity of both devices, this may also increase the level of security.

In a further alternative, the secure key may be transmitted by a combination of light and audio signals. For example, parts of the secure key may be encoded in light units and part in audio frequencies in an alternate or subsequent sequence. Thus, enabling either greater device compatibility or increased security.

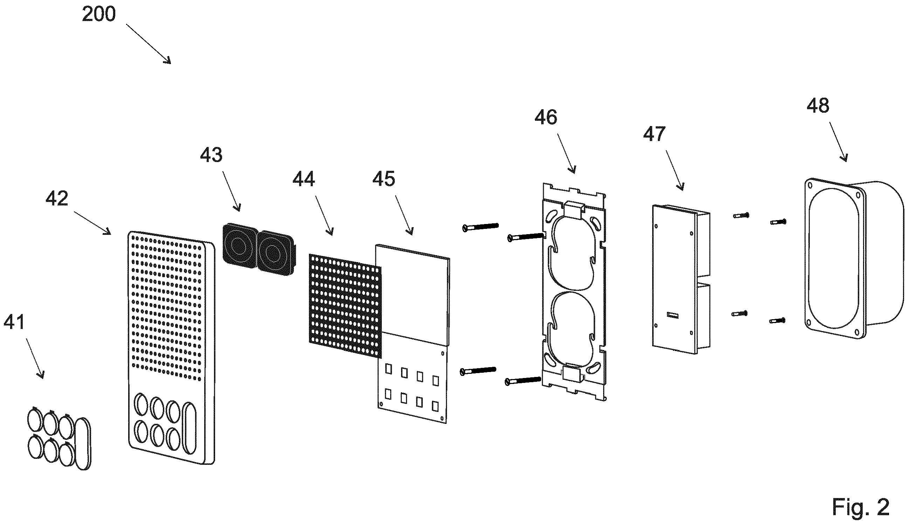

FIG 2 shows an exemplary exploded view (200) of a wall mounted control panel 20. As can be seen in this example, the number of the control buttons 41 or switches is limited, thus providing an easy and user-friendly interaction with the control panel unit. The front panel cover 42 including control buttons, 41 a sound or microphone and speaker unit 43, and a hardware implemented module representing the front processing unit 45 controlling an LED array 44 and the buttons 41. A second hardware implemented module representing the main processing and communication unit 47 which is housed in a wall integrated container 48 and mounted on a wall support 46.

## Claims

1. A method for pairing a control unit (20) with a second device (10) wherein:
the control unit (20) broadcasts a short-range signal (25), and the second device (10) receives the short-range signal, wherein the said short range signal encodes a security code;
the control unit and the second device send a connection request (21, 23) to a server (30), each of the connection requests from the control unit (20) and from the second device, including the security code or a derived sequence of the security code,
**characterized in that** the server (30) compares the connection request (21) of the control unit (20) with the connection request (23) of the second device (10), and tests whether the request (21) of the control unit (20) contains the same security code or derived sequences derived from the same security code than the security code received (23) from the second device (10),
**and in that** the server (30) pairs (88) the control unit with the second device, generates a secure key and transmits the secure key to the control unit and to the second device (90) if the test of the security code or derivative of the security code succeeds.

2. The method of the preceding claim wherein, after the pairing (88), the control unit and the second device establish a secure communication, (92) using the secure key.

3. The method of claim 1, wherein the short-range signal is an audio signal, an ultrasound signal or a luminous signal.

4. The method of any one of claim 1 or 2, wherein the server compares, if the connection request (21) of the control unit and the connection request (23) of the second device were received within a predefined delay timeframe (86).

5. A system (100) including a control unit (20), a second device (10) and a pairing server (30), wherein the control unit (20) is arranged to emit a short-range signal (25) that encodes a security code, and the second device is arranged to receive the short-range signal,
the control unit and the second device are arranged to send each a connection request (21, 23) to the pairing server (30), each of the connection requests from the control unit and from the second device, including the security code or a derived sequence of the security code, **characterized in that** the server (30) is arranged to compare the request (21) of the control unit (20) with the request (23) of the second device (10), to verify whether the connection request (21) of the control unit (20) contains the same security code or derived sequences derived from the same security code than the security code included in the connection request (23) from the second device (10), and to pair (88) the control unit and the second device and generate a secure key and send the secure key to the control unit and to the second device (90) if the verification of the security code or derivative of the security code succeeds.

6. The system of the preceding claim, wherein the second device is a mobile device, and/or the control unit is a modular wall mounted controlling device.

7. The system of claim 6, wherein the wall mounted device comprises a replaceable front module (42) and a rear module, wherein the rear module comprises a processing unit (47), and the front module comprises visualization means, for example a LED based matrix (44).

8. The system of any one of claims 5-7, wherein the short-range signal is an audio signal, an ultrasound signal or a luminous signal.

9. The system of any one of claims 5-8, in a multi-apartment building, or in a multi-family building, or in a multi-room hotel building.

10. A programmable storage device having program instructions stored thereon for causing a programmable control device to perform a method of claim 1.

11. A pairing server (30) for pairing devices, the pairing server comprising:
a pairing module (83) operable to automatically pair the devices to enable transfer of data between the devices;
**characterized in that**
the pairing module (83) is configured to compare a first security code (21) received from a control unit (20) with a second security code (23) received from a second device (10);
the pairing module (83) is configured to pair the control unit and the second device, generate a secure key and transmit the secure key to the control unit and to the second device (90) if the compared first and second security codes (21,23) received from the control unit (20) and from the second device (10) match each other.

12. The pairing server (30) according to claim 11, wherein the pairing server compares the received keys within a predefined timeframe; if the reception of one key lies out of a predefined timeframe difference between the control unit and the second device; the pairing server terminates the pairing procedure without pairing the control unit with the second device and without transmitting the second generated secure key.

## Patentansprüche

1. Verfahren zum Koppeln einer Steuereinheit (20) mit einer zweiten Vorrichtung (10), wobei:
die Steuereinheit (20) ein Nahbereichssignal (25) ausstrahlt und die zweite Vorrichtung (10) das Nahbereichssignal empfängt, wobei das besagte Nahbereichssignal einen Sicherheitsschlüssel verschlüsselt;
die Steuereinheit und die zweite Vorrichtung eine Verbindungsanfrage (21, 23) an einen Server (30) senden, wobei jede der Verbindungsanfragen von der Steuereinheit (20) und von der zweiten Vorrichtung den Sicherheitsschlüssel oder eine abgeleitete Sequenz des Sicherheitsschlüssels enthält,
**dadurch gekennzeichnet, dass** der Server (30) die Verbindungsanfrage (21) der Steuereinheit (20) mit der Verbindungsanfrage (23) der zweiten Vorrichtung (10) vergleicht und prüft, ob die Anfrage (21) der Steuereinheit (20) denselben Sicherheitsschlüssel oder von demselben Sicherheitsschlüssel abgeleitete Sequenzen enthält wie der von der zweiten Vorrichtung (10) empfangene Sicherheitsschlüssel (23),
und dass der Server (30) die Steuereinheit mit der zweiten Vorrichtung koppelt (88), einen sicheren Schlüssel erzeugt und den sicheren Schlüssel an die Steuereinheit und an die zweite Vorrichtung (90) überträgt, wenn die Überprüfung des Sicherheitsschlüssels oder einer Ableitung des Sicherheitsschlüssels erfolgreich ist.

2. Das Verfahren nach dem vorhergehenden Anspruch, bei dem nach dem Koppeln (88) die Steuereinheit und die zweite Vorrichtung eine sichere Kommunikation (92) unter Verwendung des sicheren Schlüssels herstellen.

3. Das Verfahren nach Anspruch 1, wobei das Nahbereichssignal ein Audiosignal, ein Ultraschallsignal oder ein Lichtsignal ist.

4. Das Verfahren nach einem der Ansprüche 1 oder 2, wobei der Server vergleicht, ob die Verbindungsanfrage (21) der Steuereinheit und die Verbindungsanfrage (23) der zweiten Vorrichtung innerhalb eines vordefinierten Verzögerungszeitfensters (86) empfangen wurden.

5. System (100) mit einer Steuereinheit (20), einer zweiten Vorrichtung (10) und einem Kopplungsserver (30), wobei die Steuereinheit (20) derart ausgebildet ist, dass sie ein Nahbereichssignal (25) aussendet, das einen Sicherheitsschlüssel verschlüsselt, und die zweite Vorrichtung derart ausgebildet ist, dass sie das Nahbereichssignal empfängt, wobei die Steuereinheit und die zweite Vorrichtung so angeordnet sind, dass sie jeweils eine Verbindungsanfrage (21, 23) an den Kopplungsserver (30) senden, wobei jede der Verbindungsanfragen von der Steuereinheit und von der zweiten Vorrichtung den Sicherheitsschlüssel oder eine abgeleitete Sequenz des Sicherheitsschlüssels enthält, **dadurch gekennzeichnet, dass** der Server (30) so eingerichtet ist, dass er die Anfrage (21) der Steuereinheit (20) mit der Anfrage (23) der zweiten Vorrichtung (10) vergleicht, um zu überprüfen, ob die Verbindungsanfrage (21) der Steuereinheit (20) denselben Sicherheitsschlüssel oder von demselben Sicherheitsschlüssel abgeleitete Sequenzen enthält wie der in der Verbindungsanfrage (23) von der zweiten Vorrichtung (10) enthaltene Sicherheitsschlüssel, und um die Steuereinheit und die zweite Vorrichtung zu koppeln (88) und einen sicheren Schlüssel zu erzeugen und den sicheren Schlüssel an die Steuereinheit und an die zweite Vorrichtung (90) zu senden, wenn die Überprüfung des Sicherheitsschlüssels oder der Ableitung des Sicherheitsschlüssels erfolgreich ist.

6. Das System nach dem vorhergehenden Anspruch, wobei die zweite Vorrichtung eine mobile Vorrichtung ist und/oder die Steuereinheit ein modulares, an der Wand montierte Steuerungsvorrichtung ist.

7. Das System nach Anspruch 6, wobei die an der Wand montierte Vorrichtung ein austauschbares Frontmodul (42) und ein Rückmodul umfasst, wobei das Rückmodul eine Verarbeitungseinheit (47) umfasst und das Frontmodul Visualisierungsmittel, zum Beispiel eine LEDbasierte Matrix (44), umfasst.

8. Das System nach einem der Ansprüche 5-7, wobei das Nahbereichssignal ein Audiosignal, ein Ultraschallsignal oder ein Leuchtsignal ist.

9. Das System nach einem der Ansprüche 5 bis 8 in einem Gebäude mit mehreren Wohnungen, in einem Mehrfamilienhaus oder in einem Hotel mit mehreren Zimmern.

10. Programmierbare Speichervorrichtung mit darauf gespeicherten Programmanweisungen, um eine programmierbare Steuereinheit zu veranlassen, ein Verfahren nach Anspruch 1 durchzuführen.

11. Ein Kopplungsserver (30) zum Koppeln von Vorrichtungen, wobei der Kopplungsserver umfasst:
ein Kopplungsmodul (83), das die Vorrichtungen automatisch koppeln kann, um die Übertragung von Daten zwischen den Vorrichtungen zu ermöglichen;
**dadurch gekennzeichnet, dass**
das Kopplungsmodul (83) derart ausgebildet ist, dass es einen ersten Sicherheitsschlüssel (21), der von einer Steuereinheit (20) empfangen wurde, mit einem zweiten Sicherheitsschlüssel (23) vergleicht, der von einer zweiten Vorrichtung (10) empfangen wurde;
das Kopplungsmodul (83) so ausgebildet ist, dass es die Steuereinheit und die zweite Vorrichtung koppelt, einen sicheren Schlüssel erzeugt und den sicheren Schlüssel an die Steuereinheit und an die zweite Vorrichtung (90) überträgt, wenn die verglichenen ersten und zweiten Sicherheitsschlüssel (21, 23), die von der Steuereinheit (20) und von der zweiten Vorrichtung (10) empfangen wurden, übereinstimmen.

12. Der Kopplungsserver (30) nach Anspruch 11, wobei der Kopplungsserver die empfangenen Schlüssel innerhalb eines vordefinierten Zeitfensters vergleicht; wenn der Empfang eines Schlüssels ausserhalb eines vordefinierten Zeitfensters zwischen der Steuereinheit und der zweiten Vorrichtung liegt, beendet der Kopplungsserver den Kopplungsvorgang, ohne die Steuereinheit mit der zweiten Vorrichtung zu koppeln und ohne den zweiten generierten sicheren Schlüssel zu übertragen.

## Revendications

1. Un procédé pour accoupler une unité de contrôle (20) avec un deuxième dispositif, dans lequel :
l'unité de contrôle (20) diffuse un signal de brève portée (25), et le deuxième dispositif (10) capte le signal de brève portée, dans lequel le dit signal de brève portée encode un code de sécurité;
l'unité de contrôle et le deuxième dispositif envoient une requête de connexion (21, 23) à un serveur (30), chacune des requêtes de connexion provenant de l'unité de contrôle et du deuxième dispositif comprenant le the code de sécurité ou une séquence dérivée du code de sécurité,
**caractérisé en ce que** le serveur (30) compares la requête de connexion (21) provenant de l'unité de contrôle (20) avec la requête de connexion (23) provenant du deuxième dispositif (10), et vérifie si and la requête (21) provenant de l'unité de contrôle (20) comprend le même code de sécurité ou séquence dérivée du code de sécurité que le code de sécurité reçu (23) du deuxième dispositif (10),
et **en ce que** le serveur (30) accouple (88) l'unité de contrôle avec le deuxième dispositif, génère une clé sécurisée et transmet la clé sécurisée à l'unité de contrôle et au deuxième dispositif (90) si la vérification du code de sécurité ou de la séquence dérivée du code de sécurité a succès.

2. Le procédé de la revendication précédente, dans lequel, après l'accouplement (88), l'unité de contrôle et le deuxième dispositif établissent une communication sécurisée, (92) en utilisant la clé sécurisée.

3. Le procédé de la revendication 1, dans lequel signal de brève portée est un signal acoustique, un signal à ultrasons ou un signal lumineux.

4. Le procédé de l'une quelconque des revendications 1 et 2, dans lequel le serveur compare si la requête de connexion (21) provenant de l'unité de contrôle et la requête de connexion (23) provenant du deuxième dispositif sont reçue dans un intervalle de retard prédéterminé (86).

5. Un système (100) comprenant une unité de contrôle (20), un deuxième dispositif (10) et un serveur de accouplement (30), dans lequel l'unité de contrôle (20) est configurée pour émettre un signal de brève portée (25) qui encode un code de sécurité, et le deuxième dispositif est configuré pour recevoir le signal de brève portée,
l'unité de contrôle et le deuxième dispositif sont configurés pour envoyer chacun une requête de connexion (21, 23) au serveur de accouplement (30), chacune des requêtes de connexion provenant de l'unité de contrôle et du deuxième dispositif comprenant le the code de sécurité ou une séquence dérivée du code de sécurité, **caractérisé en ce que** le serveur (30) est configuré pour comparer la requête de connexion (21) provenant de l'unité de contrôle (20) avec la requête de connexion (23) provenant du deuxième dispositif (10), vérifier si and la requête (21) provenant de l'unité de contrôle (20) comprend le même code de sécurité ou séquence dérivée du code de sécurité que le code de sécurité reçu (23) du deuxième dispositif (10), et accoupler (88) l'unité de contrôle avec le deuxième dispositif, générer une clé sécurisée et transmettre la clé sécurisée à l'unité de contrôle et au deuxième dispositif (90) si la vérification du code de sécurité ou de la séquence dérivée du code de sécurité a succès.

6. Le système de la revendication précédente, dans lequel le deuxième dispositif est un dispositif mobile et/ou l'unité de contrôle est un dispositif de contrôle modulaire mural.

7. Le système de la revendication 6, dans lequel le dispositif de contrôle modulaire mural comprend un module frontal remplaçable (42) et un module postérieur, dans lequel le module postérieur inclut un processeur (47), et le module frontal comprend des moyens de visualisation, par exemple une matrice de DEL (44).

8. Le système de l'une quelconque des revendications 5-7, dans lequel ledit signal de brève portée est un signal acoustique, un signal à ultrasons ou un signal lumineux.

9. Le système de l'une quelconque des revendications 5-8, dans un immeuble comprenant plusieurs appartements ou comprenant plusieurs familles, ou dans un hôtel comprenant plusieurs pièces.

10. Un dispositif de stockage programmable avec des instructions de programme stockés pour causer l'exécution du procédé de la revendication 1 par un dispositif de contrôle programmable.

11. Un serveur d'accouplement (30) pour accoupler des dispositifs, le serveur comprenant :
Un module d'accouplement (83) opérable pour accoupler automatiquement les dispositifs en permettant le transfert de données entre les dispositifs
**caractérisé en ce que**
le module d'accouplement (83) est configuré pour comparer un premier code de sécurité (21) reçu d'une unité de contrôle (20) avec un deuxième code de sécurité (23) reçu d'un deuxième dispositif (10),
le module d'accouplement étant configuré pour accoupler l'unité de contrôle avec le deuxième dispositif, générer une clé sécurisée et transmettre la clé sécurisée à l'unité de contrôle et au deuxième dispositif (90) si le premier code de sécurité et le deuxième code de sécurité reçu de l'unité de contrôle et du deuxième dispositif se correspondent.

12. Le serveur d'accouplement (30) selon la revendication 11, dans lequel le serveur d'accouplement compare les clés sécurisées reçues dans un intervalle de temps prédéterminé ; si la réception d'une clé se situe au dehors d'une différence temporelle entre l'unité de contrôle et le deuxième dispositif prédéfinie ; le serveur d'accouplement termine la procédure d'accouplement sans accoupler le deuxième dispositif avec l'unité de contrôle et sans transmettre la deuxième clé de sécurité généré.
